# EUROPEAN PATENT SPECIFICATION

(11) **EP 2 919 964 B1**
(45) Date of publication and mention of the grant of the patent: **11.01.2017**
(21) Application number: 13808285.4
(22) Date of filing: 12.11.2013
(51) Int. Cl.: B29C 49/20, B29L 31/00

(54) **METHOD FOR PRODUCING A BLOW MOULDED FUEL FILLER SYSTEM FOR A MOTOR VEHICLE AND FUEL FILLER SYSTEM FOR A MOTOR VEHICLE**
VERFAHREN ZU HERSTELLUNG EINES BLASGEFORMTEN EINFÜLLSTUTZENS FÜR EIN KFZ UND SELBIGER EINFÜLLSTUTZEN FÜR EIN FAHRZEUG
PROCÉDÉ POUR SOULAGE EN MATIÈRE PLASTIQUE UNE GOULOTTE DE REMPLISSAGE POUR UNE VÉHICULE ET UNE GOULOTTE DE REMPLISSAGE POUR UNE VÉHICULE

(30) Priority: 16.11.2012 DE 102012022395
(43) Date of publication of application: 23.09.2015
(73) Proprietor: Illinois Tool Works Inc., Glenview, IL 60025 (US)
(72) Inventor: BECK, Christian, 97285 Rottingen (DE); KAPAUN, Matthias, 97253 Gaukonigshofen (DE)
(74) Representative: Hauck Patentanwaltspartnerschaft mbB
(86) International application number: PCT/US2013/069544
(87) International publication number: WO 2014/078259

(56) References cited:
- EP-A1- 1 847 242
- EP-A1- 2 236 903
- EP-A2- 1 693 241
- WO-A1-2004/110801
- DE-A1- 2 112 835
- FR-A1- 2 930 475
- JP-A- H08 244 101
- US-A- 3 084 396
- US-A1- 2005 158 495
- US-A1- 2006 180 959
- US-A1- 2008 290 564
- US-B1- 6 508 275

## Description

The invention relates to a method for producing a fuel filler system for a motor vehicle. The invention furthermore relates to a fuel filler system for a motor vehicle. There is a known practice in the case of fuel filler systems of inserting fuel filler devices, e.g. capless or capped fuel filler devices, into plastic pipes, which are then connected to the fuel tank of a vehicle. The fastening of the fuel filler device in the plastic pipe can be effected mechanically, with corresponding complex fastening and sealing measures being required. Fastening can also be effected by material engagement as part of a welding process. The plastic pipes used here are often produced in a blow moulding process. The insertion of the fuel filler device, e.g. the welding in the plastic pipe, is then effected in a separate working step after the plastic pipe has been removed in dimensionally stable form from the moulding tool used for the blow moulding process. Both abovementioned methods for introducing the fuel filler device into the plastic pipe are complex.

WO 2004/110801 A1 describes a multilayered blow-molded filling tube with two mouth areas at both ends of the tube which are defined in uniform wall thickness to approve their welding properties.

US 2006/0180959 A1 discloses a method of coupling a component to a fuel fill tube, wherein the inlet cup is moved downward into a mold and bonds to a parison located in the mold.

US 6 508 275 B1 describes a molded fuel filler pipe comprising a deformable bellow portion which allows the fuel filler pipe to be elongated and bend.

It is therefore the underlying object of the invention to provide a method and a fuel filler system of the abovementioned type which involves less outlay on production than the prior art.

The invention achieves this object through the subjects of independent claims 1 and 14. Advantageous embodiments can be found in the dependent claims, the description and the figures.

The invention achieves the object, on the one hand, by a method for producing a fuel filler system for a motor vehicle, comprising the steps:
- a tube shaped plastic part is introduced into a moulding tool,
- a pressure gas pin is inserted into a first end of the plastic part and the moulding tool is closed around the first end of the plastic part accommodating the pressure gas pin,
- in case the opposite second end of the plastic part is still open, this end is also closed,
- pressure gas is introduced into the plastic part through the pressure gas pin, whereby the plastic part is expanded and adjusted to the contour of the inner walls of the moulding tool for providing a pipe shape,
- the pressure gas pin is retracted from the plastic part and a constriction of the first end of the plastic part resulting from the closing around the pressure gas pin is separated,
- a fuel filler device is inserted into the first end of the plastic part while the plastic part is still located in the moulding tool,
- a contact pressure is exerted from the outside onto the first end of the plastic part accommodating the fuel filler device, whereby a welding of the fuel filler device with the first end of the plastic part occurs,
- the finished plastic part is removed from the moulding tool together with the fuel filler device welded therein.

Thus, the fuel filler system according to the invention is produced in a blow moulding process. For this purpose, a tube shaped plastic part is inserted into a mould cavity of a moulding tool. The plastic part is composed of a thermoplastic of a kind known per se. It is at a sufficient temperature for the blow moulding process. This temperature can be generated before and/or after insertion into the moulding tool. For example, the tube shaped plastic part can have been produced in an extrusion process and inserted into the moulding tool substantially directly after the extrusion process. The residual heat from the extrusion process can then be used partially or completely for the blow moulding process.

In the moulding tool, the tube shaped plastic part is expanded and pressed against the inner walls of the moulding tool to form a plastic pipe by introducing pressure gas, e.g. compressed air. Before the pressure gas is introduced, the tube shaped plastic part must be sealed in a gastight manner. For this purpose, the moulding tool is closed around the first end of the plastic part accommodating the pressure gas pin. The opposite, second end of the tube shaped plastic part must also be sealed. For this purpose, the moulding tool can also be closed around the second end of the plastic part, for example.

After the pressure gas pin used to introduce the pressure gas has been removed and a constriction of the first end which has arisen as the first end was closed has been separated, a fuel filler device is, according to the invention, inserted into the first end while the plastic part is still in the moulding tool. The fuel filler device is then welded in the plastic part by exerting a suitable contact pressure from the outside in the presence of a sufficient welding temperature, likewise while the plastic part is still in the moulding tool. The fuel filler device is thus materially incorporated into the plastic part during the blow moulding process itself, in particular while still in the moulding tool used for this purpose. A constriction which has formed through the optional closure of the second end of the plastic part can of course also be separated before or after the insertion of the fuel filler device in order to produce a plastic pipe open at both ends. After a cooling process sufficient for the dimensional stability of the plastic part, the now pipe shaped plastic part is removed from the moulding tool together with the fuel filler device incorporated materially into it. Owing to the material connection, no seals are required here between the plastic part and the fuel filler device inserted therein.

Moreover, the material connection ensures an improvement in the fuel resistance and a reduction in emissions, especially fuel vapors, in the region of the plastic pipe. In comparison with conventional welding of the fuel filler device in a separate process step after the removal of the plastic pipe from the blow moulding tool or indeed in comparison with a crimping method used in the prior art, the production of the fuel filler system is simplified according to the invention. The components required for fastening and production are also reduced as compared with the prior art. Moreover, the serviceability of the component is improved. In principle, the invention can be employed for conventional deflectors with or without a misfuel inhibitor (MFI) and "capless" filler systems with or without an MFI, systems with one or more sealed caps, serviceable or non-serviceable systems. The fuel filler device inserted can be of single-part or multipart design. It can involve a complete capless filler system or just an assembly pot. The fuel filler system produced according to the invention can then be installed in a motor vehicle, in particular a passenger car or a truck, where it is connected to a fuel tank of the motor vehicle.

It should be explicitly noted that the fuel filler device inserted into and welded to the pipe shaped plastic part in the moulding tool does not have to be complete at this stage. It is also possible for the fuel filler device inserted to be merely a filler neck or an adapter socket for a filler system to be inserted subsequently, e.g. outside the moulding tool. It is also possible for further components of the fuel filler device to be inserted in the latter after the welding of the fuel filler device in the plastic part and possibly also after the removal of the fuel filler system from the moulding tool.

As already mentioned, the tube shaped plastic part can be provided in an extrusion process. Production is thereby simplified, and the residual heat from the extrusion process can be used, in particular used completely, for the subsequent blow moulding process in the moulding tool, as explained at the outset.

The closing of the moulding tool around the first end of the plastic part accommodating the pressure gas pin can be effected through at least one moveable section of the moulding tool. The optional closing of the second end of the plastic part can furthermore likewise be effected through at least one moveable section of the moulding tool. In particular, the movable sections of the moulding tool can be constricted during this process and thus reliably close any openings in the tube shaped plastic part for the blow moulding process. At the first end, constriction takes place around the first end and the pressure gas pin situated therein since it is via the latter that the pressure gas for the blow moulding process is subsequently introduced into the moulding tool.

The separation of the constriction of the first end of the plastic part produced by the closing around the pressure gas pin can be effected through at least one moveable section of the moulding tool. In particular, the at least one movable section of the moulding tool can close around the constriction of the first end and thus separate the constriction. The constriction has formed through the closing of the moulding tool around the first end with the pressure gas pin situated therein before the introduction of the pressure gas. However, it is also possible to provide a separate cutting device which closes around the constriction of the first end in order in this way to separate the constriction. The decisive factor is that the first end should have a sufficiently large opening after the separation process for the insertion of the fuel filler device. In a corresponding fashion, it is also possible for a constriction that may be present in the region of the second end to be separated by means of at least one movable section of the moulding tool or by a separate cutting device, for example.

The contact pressure exerted for welding the fuel filler device with the first end of the plastic part is effected through at least one moveable section of the moulding tool. The at least one movable section of the moulding tool can once again be constricted and thus exert the contact pressure required for welding on the first end of the plastic part and on the fuel filler device situated therein. The at least one moveable section of the moulding tool can comprise at least one bevelled or rounded edge. The at least one bevelled or rounded edge can be provided on a side of the at least one moveable section of the moulding tool which is facing away from the opening of the first end of the plastic part. In particular, the bevelled or rounded edge can be designed as a chamfer. This ensures that there is no damage to the wall of the plastic part during the exertion of the contact pressure required for welding, e.g. due to a sharp edge being pressed into the wall. The bevelled edge, which reliably prevents this, can run at an angle of between 30° and 60° to the longitudinal direction of the tube shaped plastic part, for example.

It may be mentioned in principle that all or some of the movable sections of the moulding tool can move between an open and a closed position in a direction substantially perpendicular to the longitudinal direction of the tube shaped plastic part.

As already explained, the welding of the fuel filler device in the plastic part is effected by a contact pressure from the outside in conjunction with a sufficient temperature of the plastic part. In this case, a temperature of the plastic part used for the welding can be provided essentially completely through a residual heat of the plastic part after introducing the pressure gas for expanding the tube shaped plastic part. In particular, it is possible to make substantially exclusive use of the residual heat from the blow moulding process for the temperature of the plastic part used or required for the welding. No separate heating source is then required for the welding process. This makes the production method particularly simple and quick. As an alternative, however, it is also possible for a temperature necessary for the welding of the plastic part to be at least partially produced through a separate heating source, in particular completely through a separate heating source. The separate heating source then produces the required temperature of the plastic part, possibly in addition to a persisting residual heat of the plastic part after the introduction of the pressure gas for expanding the tube shaped plastic part.

As a fuel filler device a guiding device for a fuel filler pistol can be inserted. This can be a fuel filler head, for example. As already explained, it is also possible to insert a capless fuel filler device as a fuel filler device. As has likewise been explained, it is also possible for a fuel filler device with a misfuel inhibitor (MFI) to be inserted as a fuel filler device.

According to a further aspect, the invention also relates to a method for producing a fuel filler system for a motor vehicle, comprising the steps: at least two plastic parts are assembled to a pipe shaped plastic part, wherein a fuel filler device is inserted into the pipe shape formed by the at least two plastic parts, and the at least two plastic parts are welded together for forming the pipe shaped plastic part, wherein also welding of the fuel filler device in the pipe shaped plastic part occurs.

The at least two plastic parts can be two half shells, for example, which, when assembled, form the pipe shaped plastic part. The at least two plastic parts can be produced in a plastic injection moulding process, for example. The welding can be effected in any suitable manner. For example, an ultrasonic welding method can be employed. Welding of the fuel filler device in the at least two plastic parts is in turn effected in a simple manner in one method step. This aspect of the invention may be of interest especially for diesel vehicles, where the emissions requirements are lower than with spark ignition motor vehicles.

The invention furthermore achieves the object through a fuel filler system for a motor vehicle, produced by one of the methods according to the invention.

An illustrative embodiment of the invention is explained in greater detail below with reference to schematic figures, in which:
Figure 1 shows a section of a tube shaped plastic part used in the method according to the invention,
Figure 2 shows a first method step of the method according to the invention in a sectional view,
Figure 3 shows a second method step of the method according to the invention in a sectional view,
Figure 4 shows a third method step of the method according to the invention in a sectional view, and
Figure 5 shows a fourth method step of the method according to the invention in a sectional view.

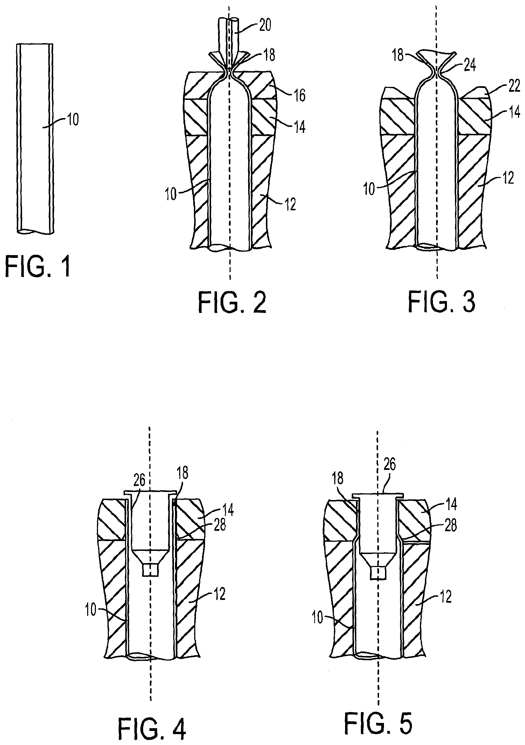

Unless stated otherwise, the same reference signs denote identical subjects in the figures. A section of a tube shaped plastic part 10, e.g. a circular-cylindrical plastic part, is shown in figure 1. The plastic part 10 is composed of a thermoplastic and has been produced in an extrusion process in the illustrative embodiment shown. In the method according to the invention shown in figure 2, the tube shaped plastic part 10 from figure 1 is inserted into a moulding tool formed by a plurality of sections 12, 14, 16.

In the state shown in figure 2, a pressure gas pin 20 has been inserted into the first end 18 of the tube shaped plastic part 10, that at the top in figure 2. Gas, e.g. air, can be introduced into the tube shaped plastic part 10 under high pressure by means of a pressure gas source (not shown), e.g. a compressed air source, via the pressure gas pin 20. That section 16 of the moulding tool which is at the top in figure 2 has been moved in such a way after the insertion of the pressure gas pin 20 that the first end 18 of the tube shaped plastic part 10, said end being shown in figure 2, is closed gastightly around the pressure gas pin 20. The opposite, second end of the tube shaped plastic part 10, which is not shown in the figures, is likewise closed in a gastight manner. To reach the state of the method in figure 2, pressure gas is then introduced into the tube shaped plastic part 10 via the pressure gas pin 20, whereby the tube shaped plastic part 10 is expanded and adapted to the contour of the inner walls which is defined by the moulding tool, in particular sections 12, 14, 16 thereof. The temperature of the tube shaped plastic part 10 which is required for this blow moulding process can arise from the residual heat of the tube shaped plastic part 10 after the extrusion process.

In figure 3, it can be seen that that section 16 of the moulding tool which is at the top in figure 2 has been removed from the tube shaped plastic part 10, in particular from the first end 18 thereof. By means of a cutting device indicated by reference sign 22 in figure 3, the first end 18 of the tube shaped plastic part 10, in particular a constriction 24 produced therein during the closing of the first end 18, is then separated. Any constriction which may be present in the region of the second end (not shown) of the tube shaped plastic part 10 can be separated in the same way, resulting overall in a tube shaped plastic part 10 defined by the contour of the moulding tool.

After the removal of the cutting device 22, a fuel filler device 26 is inserted into the first end 18 of the plastic part 10 while the plastic part is still in the moulding tool, as can be seen in figure 4. The fuel filler device 26 can be, for example, a guiding device for a fuel filler pistol, a filler neck or an adapter socket for receiving a fuel filler system to be inserted subsequently. The fuel filler device 26 can also be a fuel filler device with or without a misfuel inhibitor (MFI). The fuel filler device 26 can furthermore be a capless fuel filler device or a fuel filler device having at least one cap.

In the next method step, which is illustrated in figure 5, section 14 of the moulding tool is moved inward, thereby exerting a contact pressure from the outside on the first end 18 of the plastic part 10, the end accommodating the fuel filler device 26. As can be seen in figure 5, this involves a constriction of the plastic part 10 in the region of its first end 18 toward the fuel filler device 26 situated therein. By virtue of this contact pressure and of the residual heat of the tube shaped plastic part 10 remaining from the preceding blow moulding process, welding of the fuel filler device 26 in the tube shaped plastic part 10 occurs, especially in the region of the first end 18 thereof. If necessary, a separate heating source can additionally be provided to make available a temperature required for the welding process. As can furthermore be seen in figure 5, that section 14 of the moulding tool which is at the top in figure 5 has, at its bottom end, a bevelled edge 28. This bevelled edge 28 prevents a sharp edge from being pressed into the wall of the plastic part 10 as the contact pressure is exerted, which could lead to damage of the plastic part 10.

## Claims

1. Method for producing a fuel filler system for a motor vehicle, comprising the steps:
- a tube shaped plastic part (10) is introduced into a moulding tool (12)
- a pressure gas pin (20) is inserted into a first end (18) of the plastic part (10) and the moulding tool is closed around the first end (18) of the plastic part (10) accommodating the pressure gas pin (20),
- in case the opposite second end of the plastic part (10) is still open, this end is also closed,
- pressure gas is introduced into the plastic part (10) through the pressure gas pin (20), whereby the plastic part (10) is expanded and adjusted to the contour of the inner walls of the moulding tool for providing a pipe shape,
- the pressure gas pin (20) is retracted from the plastic part (10) and a constriction (24) of the first end (18) of the plastic part (10) resulting from the closing around the pressure gas pin (20) is separated,
- a fuel filler device (26) is inserted into the first end (18) of the plastic part (10) while the plastic part (10) is still located in the moulding tool,
- a contact pressure is exerted from the outside onto the first end (18) of the plastic part (10) accommodating the fuel filler device (26), whereby a welding of the fuel filler device (26) with the first end (18) of the plastic part occurs, wherein the contact pressure exerted for welding the fuel filler device (26) with the first end (18) of the plastic part (10) is effected through a movement of at least one additional moveable section (14) of the moulding tool,
- the finished plastic part (10) is removed from the moulding tool together with the fuel filler device (26) welded therein.

2. Method according to claim 1, **characterized in that** the tube shaped plastic part (10) is provided in an extrusion process.

3. Method according to one of the preceding claims, **characterized in that** a temperature of the plastic part (10) necessary for the welding is provided essentially completely through a residual heat of the plastic part (10) after introducing the pressure gas for expanding the tube shaped plastic part (10).

4. Method according to one of claims 1 or 2, **characterized in that** a temperature necessary for the welding of the plastic part (10) is at least partially produced through a separate heating source.

5. Method according to one of the preceding claims, **characterized in that** the closing of the moulding tool around the first end (18) of the plastic part (10) accommodating the pressure gas pin (20) is effected through at least one moveable section (16) of the moulding tool.

6. Method according to one of the preceding claims, **characterized in that** the optional closing of the second end of the plastic part (10) is effected through at least one moveable section of the moulding tool.

7. Method according to one of the preceding claims, **characterized in that** the separation of the constriction (24) of the first end (18) of the plastic part (10) produced by the closing around the pressure gas pin (20) is effected through at least one moveable section of the moulding tool.

8. Method according to one of the preceding claims, **characterized in that** the at least one moveable section (14) of the moulding tool comprises at least one bevelled or rounded edge (28).

9. Method according to claim 8, **characterized in that** the at least one bevelled or rounded edge (28) is provided on a side of the at least one moveable section (14) of the moulding tool which is facing away from the opening of the first end (18) of the plastic part (10).

10. Method according to one of the preceding claims, **characterized in that** as a fuel filler device (26) a guiding device for a fuel filler pistol is inserted.

11. Method according to one of the preceding claims, **characterized in that** as a fuel filler device (26) a capless fuel filler device is inserted.

12. Method according to one of the preceding claims, **characterized in that** as a fuel filler device (26) a fuel filler device with a misfuel inhibitor is inserted.

13. Method for producing a fuel filler system for a motor vehicle, comprising the steps:
- at least two plastic parts are assembled to a pipe shaped plastic part, wherein a fuel filler device is inserted into the pipe shape formed by the at least two plastic parts,
- the at least two plastic parts are welded together for forming the pipe shaped plastic part, wherein also welding of the fuel filler device in the pipe shaped plastic part occurs.

14. Fuel filler system for a motor vehicle, produced in a method according to one of the preceding claims.

## Patentansprüche

1. Verfahren zur Herstellung eines Einfüllstutzens für ein KFZ, umfassend die Schritte:
- ein rohrförmiges Kunststoffteil (10) wird in ein Formwerkzeug (12) eingeführt,
- ein Druckgasstift (20) wird in ein erstes Ende (18) des Kunststoffteils (10) eingesetzt und das Formwerkzeug wird um das erste Ende (18) des Kunststoffteils (10), das den Gasdruckstift (20) aufnimmt, geschlossen,
- falls das gegenüberliegende zweite Ende des Kunststoffteils (10) immer noch geöffnet ist, wird dieses Ende auch geschlossen,
- Druckgas wird in das Kunststoffteil (10) durch den Druckgasstift (20) eingeleitet, wobei das Kunststoffteil (10) aufgeweitet und an die Kontur der Innenwände des Formwerkzeugs zum Bereitstellen einer Rohrform angepasst wird,
- der Druckgasstift (20) wird aus dem Kunststoffteil (10) herausgezogen und eine Verengung (24) des ersten Endes (18) des Kunststoffteils (10), das aus dem Schließen um den Druckgasstift (20) resultiert, wird abgetrennt,
- eine Einfüllvorrichtung (26) wird in das erste Ende (18) des Kunststoffteils (10) eingesetzt, während sich das Kunststoffteil (10) weiterhin im Formwerkzeug befindet,
- ein Kontaktdruck wird von außen auf das erste Ende (18) des Kunststoffteils (10), das die Kraftstoffeinfüllvorrichtung (26) aufnimmt, ausgeübt, wodurch ein Verschweißen der Kraftstoffeinfüllvorrichtung (26) mit dem ersten Ende (18) des Kunststoffteils erfolgt, wobei der Kontaktdruck, der zum Verschweißen der Kraftstoffeinfüllvorrichtung (26) mit dem ersten Ende (18) des Kunststoffteils (10) ausgeübt wird, durch eine Bewegung mindestens eines zusätzlichen, beweglichen Abschnitts (14) des Formwerkzeugs (14) bewirkt wird,
- das fertige Kunststoffteil (10) wird aus dem Formwerkzeug zusammen mit der Kraftstoffeinfüllvorrichtung (26), die damit verschweißt ist, entfernt.

2. Verfahren nach Anspruch 1, **dadurch gekennzeichnet, dass** das rohrförmige Kunststoffteil (10) in einem Extrusionsverfahren bereitgestellt wird.

3. Verfahren nach einem der vorhergehenden Ansprüche, **dadurch gekennzeichnet, dass** eine Temperatur des Kunststoffteils (10), die für das Schweißen notwendig ist, im Wesentlichen vollständig durch eine Restwärme des Kunststoffteils (10) bereitgestellt wird, nachdem das Druckgas zum Aufweiten des rohrförmigen Kunststoffteils (10) eingeleitet wurde.

4. Verfahren nach einem der Ansprüche 1 oder 2, **dadurch gekennzeichnet, dass** eine Temperatur, die zum Schweißen des Kunststoffteils (10) notwendig ist, mindestens teilweise durch eine separate Heizungsquelle erzeugt wird.

5. Verfahren nach einem der vorhergehenden Ansprüche, **dadurch gekennzeichnet, dass** das Schließen des Formwerkzeugs um das erste Ende (18) des Kunststoffteils (10), das den Druckgasstift (20) aufnimmt, durch mindestens einen beweglichen Abschnitt (16) des Formwerkzeugs bewirkt wird.

6. Verfahren nach einem der vorhergehenden Ansprüche, **dadurch gekennzeichnet, dass** das Schließen des zweiten Endes des Kunststoffteils (10) durch mindestens einen beweglichen Abschnitt des Formwerkzeugs bewirkt wird.

7. Verfahren nach einem der vorhergehenden Ansprüche, **dadurch gekennzeichnet, dass** das Abtrennen der Verengung (24) des ersten Endes (18) des Kunststoffteils (10), die durch Schließen um den Druckgasstift (20) erzeugt wird, durch mindestens einen beweglichen Abschnitt des Formwerkzeugs bewirkt wird.

8. Verfahren nach einem der vorhergehenden Ansprüche, **dadurch gekennzeichnet, dass** der mindestens eine bewegliche Abschnitt (14) des Formwerkzeugs mindestens eine abgeschrägte oder abgerundete Kante (28) aufweist.

9. Verfahren nach Anspruch 8, **dadurch gekennzeichnet, dass** die mindestens eine abgeschrägte oder abgerundete Kante (28) auf einer Seite des mindestens einen beweglichen Abschnitts (14) des Formwerkzeugs bereitgestellt wird, das von der Öffnung des ersten Endes (18) des Kunststoffteils (10) abgewandt ist.

10. Verfahren nach einem der vorhergehenden Ansprüche, **dadurch gekennzeichnet, dass** als eine Kraftstoffeinfüllvorrichtung (26) eine Führungseinrichtung für eine Kraftstoffeinfüllpistole eingesetzt wird.

11. Verfahren nach einem der vorhergehenden Ansprüche, **dadurch gekennzeichnet, dass** als eine Kraftstoffeinfüllvorrichtung (26) eine deckellose Kraftstoffeinfüllvorrichtung eingesetzt wird.

12. Verfahren nach einem der vorhergehenden Ansprüche, **dadurch gekennzeichnet, dass** als eine Kraftstoffeinfüllvorrichtung (26) eine Kraftstoffeinfüllvorrichtung eingesetzt wird, die das Einfüllen von falschem Kraftstoff verhindert.

13. Verfahren zur Herstellung eines Einfüllstutzens für ein KFZ, umfassend die Schritte:
- mindestens zwei Kunststoffteile werden an ein rohrförmiges Kunststoffteil gebaut, wobei eine Kraftstoffeinfüllvorrichtung in die Rohrform eingesetzt wird, die von mindestens zwei Kunststoffteilen gebildet wird,
- die mindestens zwei Kunststoffteile werden miteinander verschweißt, um das rohrförmige Kunststoffteil zu bilden, wobei währenddessen auch das Verschweißen der Kraftstoffeinfüllvorrichtung in dem rohrförmigen Kunststoffteil erfolgt.

14. Kraftstoffeinfüllstutzen für ein KFZ, der in einem Verfahren nach einem der vorhergehenden Ansprüche hergestellt wird.

## Revendications

1. Procédé de production d'un système de remplissage de carburant pour véhicule automobile, comprenant les étapes suivantes :
- on introduit une pièce en matière plastique (10) en forme de tube dans un outil de moulage (12),
- on insère une aiguille (20) de gaz sous pression dans une première extrémité (18) de la pièce plastique (10) et on ferme le moule autour de la première extrémité (18) de la pièce plastique (10) recevant l'aiguille (20) de gaz sous pression,
- dans le cas où la seconde extrémité opposée de la pièce plastique (10) est encore ouverte, on ferme aussi cette extrémité,
- on introduit du gaz sous pression dans la pièce plastique (10) par l'aiguille (20) de gaz sous pression, moyennant quoi la pièce plastique (10) se dilate et s'ajuste au contour des parois intérieures du moule pour produire une forme de tuyau,
- on retire l'aiguille (20) de gaz sous pression de la pièce plastique (10) et on sépare un étranglement (24) de la première extrémité (18) de la pièce plastique (10) résultant de la fermeture autour de l'aiguille (20) de gaz sous pression,
- on insère un dispositif (26) de remplissage de carburant dans la première extrémité (18) de la pièce plastique (10), alors que la pièce plastique (10) se trouve encore dans le moule,
- on exerce de l'extérieur une pression de contact sur la première extrémité (18) de la pièce plastique (10) où est logé le dispositif (26) de remplissage de carburant, moyennant quoi il se produit un soudage du dispositif (26) de remplissage de carburant avec la première extrémité (18) de la pièce plastique, dans lequel la pression de contact exercée pour souder le dispositif (26) de remplissage de carburant avec la première extrémité (18) de la pièce plastique (10) est obtenue par un déplacement d'au moins une partie supplémentaire (14) mobile du moule,
- on retire du moule la pièce plastique (10) finie ainsi que le dispositif (26) de remplissage de carburant qui y est soudé.

2. Procédé selon la revendication 1, **caractérisé en ce que** la pièce plastique (10) en forme de tube est produite par un procédé d'extrusion.

3. Procédé selon l'une quelconque des revendications précédentes, **caractérisé en ce que** la température de la pièce plastique (10) nécessaire pour le soudage provient pour l'essentiel complètement de la chaleur résiduelle de la pièce plastique (10) après l'introduction du gaz sous pression pour dilater la pièce plastique (10) en forme de tube.

4. Procédé selon la revendication 1 ou 2, **caractérisé en ce que** la température de la pièce plastique (10) nécessaire pour le soudage est au moins en partie produite par une source de chauffage séparée.

5. Procédé selon l'une quelconque des revendications précédentes, **caractérisé en ce que** la fermeture du moule autour de la première extrémité (18) de la pièce plastique (10) où est logée l'aiguille (20) de gaz sous pression s'effectue à l'aide d'au moins une section mobile (16) du moule.

6. Procédé selon l'une quelconque des revendications précédentes, **caractérisé en ce que** la fermeture éventuelle de la seconde extrémité de la pièce plastique (10) s'effectue à l'aide d'au moins une section mobile du moule.

7. Procédé selon l'une quelconque des revendications précédentes, **caractérisé en ce que** la séparation de l'étranglement (24) de la première extrémité (18) de la pièce plastique (10) produit par la fermeture autour de l'aiguille (20) de gaz sous pression s'effectue à l'aide d'au moins une section mobile du moule.

8. Procédé selon l'une quelconque des revendications précédentes, **caractérisé en ce que** ladite section mobile (14) du moule comprend au moins un bord (28) biseauté ou arrondi.

9. Procédé selon la revendication 8, **caractérisé en ce que** ledit bord (28) biseauté ou arrondi est disposé sur le côté de ladite section mobile (14) du moule qui est tourné du côté opposé à l'ouverture de la première extrémité (18) de la pièce plastique (10).

10. Procédé selon l'une quelconque des revendications précédentes, **caractérisé en ce que** on insère comme dispositif (26) de remplissage de carburant un pistolet de remplissage de carburant.

11. Procédé selon l'une quelconque des revendications précédentes, **caractérisé en ce que** on insère comme dispositif (26) de remplissage de carburant un dispositif de remplissage de carburant sans bouchon.

12. Procédé selon l'une quelconque des revendications précédentes, **caractérisé en ce que** on insère comme dispositif (26) de remplissage de carburant un dispositif de remplissage de carburant empêchant les erreurs de carburant.

13. Procédé de production d'un système de remplissage de carburant pour véhicule automobile, comprenant les étapes suivantes :
- on assemble au moins deux pièces plastique en une pièce plastique en forme de tuyau, dans lequel on insère un dispositif de remplissage de carburant dans la forme de tube constituée par lesdites deux pièces plastique,
- on soude ensemble lesdites deux pièces plastique pour constituer la pièce plastique en forme de tuyau, dans lequel a également lieu le soudage du dispositif de remplissage de carburant dans la pièce plastique en forme de tuyau.

14. Système de remplissage de carburant pour véhicule automobile, produit suivant un procédé selon l'une quelconque des revendications précédentes.
